# EUROPEAN PATENT SPECIFICATION

(11) **EP 3 508 375 B1**
(45) Date of publication and mention of the grant of the patent: **27.04.2022**
(21) Application number: 16915240.2
(22) Date of filing: 01.11.2016
(51) Int. Cl.: B60N 2/00, B60N 2/70

(54) **LOAD DETECTION SENSOR UNIT**
LADUNGSERFASSUNGSSENSOREINHEIT
UNITÉ DE CAPTEUR DE DÉTECTION DE CHARGE

(30) Priority: 30.08.2016 JP 2016168353
(43) Date of publication of application: 10.07.2019
(73) Proprietor: Fujikura Ltd., Tokyo 135-8512 (JP)
(72) Inventor: KAMESHIMA, Takashi, Sakura-shi, Chiba 285-8550 (JP)
(74) Representative: Grünecker Patent- und Rechtsanwälte PartG mbB
(86) International application number: PCT/JP2016/082470
(87) International publication number: WO 2018/042685

(56) References cited:
- WO-A1-2014/075953
- WO-A1-2015/083390
- WO-A1-2016/121835
- WO-A1-2016/121836
- DE-U1-202015 001 912
- JP-A- 2010 097 866
- JP-A- 2010 097 866
- US-A1- 2008 191 524

## Description

### Technical Field

The present invention relates to a load detection sensor unit and suitable for use under an environment where vibrations are applied.

### Background Art

An alarm system that warns about not wearing a seat belt during riding in a vehicle has been put to practical use as one of safety systems in vehicles. In this alarm system, a warning is issued when wearing of a seat belt is not detected in a state where seating of a person has been detected. A load detection sensor that detects a load by be used as the device that detects the seating of a person.

A sheet-like load detection sensor in which a connection part between a terminal of the load detection sensor and a signal cable is covered with a resin such as a hot melt adhesive is known. Paten Literature 1 describes such a load detection sensor. The load detection sensor has such a connection structure between the terminal and the signal cable and is disposed on a seat cushion.

Further, a load detection sensor and a seating sensor that are disposed under a seat cushion are known. Patent Literature 2 describes such a seating sensor. The seating sensor is mounted on a mount which is disposed under a seat cushion, and a terminal part projects from the mount.

Patent Literature 3 discloses a seating sensor arranged on a holder. A connector is connected to a load detection portion of the seating sensor via a flexible conduction portion. The connector is configured with an engagement portion to be detachably attached to a retaining portion provided below the holder on an extension of the holder. Patent Literature 4 discloses a seat occupancy sensor comprising a support plate provided with active switches. The switches are to be connected with the vehicle control unit in a known manner. The seating sensor unit of Patent Literature 5 comprises a pressure-responsive membrane switch electrically linked to a connection tail, which is protected by a hot-melt casing, the connection tail serving to interface the sensor device with read-out electronics. Patent Literature 6 discloses a seating sensor for a seat for industrial vehicles comprising a flat membrane switch. A connector is connected to the membrane switch via wiring terminals. A control circuit is to be connected to the connector through a harness.

[Patent Literature 1] JP 2013-171790 A
[Patent Literature 2] JP 2014-210554 A
[Patent Literature 3] WO 2015/083390 A1
[Patent Literature 4] DE 20 2015 001912 Ul
[Patent Literature 5] WO 2104/075953 A1
[Patent Literature 6] US 2008/191524 A1

### Summary of Invention

In the seating sensor described in Patent Literature 2, a connection structure between a terminal and a signal cable of a vehicle is unclear. However, it can be considered that the connection structure between the terminal and the signal cable described in Patent Literature 1 is used in such a seating sensor.

However, when the connection structure of Patent Literature 1 is applied to the seating sensor described in Patent Literature 2, the part of the seating sensor projecting from the mount tends to hang down due to the weight of the resin which covers the connection part. Thus, a part of the seating sensor located on the edge of the mount may be bent, and a stress may be applied to the bent part. As a result, a break may occur in the part. Further, when vibrations are applied, for example, in a seat for a vehicle, the resin which covers the connection part may move up and down by its own weight, and the part of the seating sensor located on the edge of the mount may repeatedly bend and stretch. Such repetitive bending and stretching are highly likely to result in a break. Thus, there is a demand for a load detection sensor that is disposed under a seat cushion and has high durability.

Thus, it is an object of the present invention to provide a load detection sensor unit having high durability.

To solve the problem, the present invention is a load detection sensor unit disposable under a seat cushion, the load detection sensor unit including: a load detection sensor having a sheet-like shape, the load detection sensor including a pressure sensitive element and a terminal electrically connected to the pressure sensitive element; a support plate on which the pressure sensitive element is mounted; and a protective resin that covers the terminal, wherein the protective resin is fixed to the support plate by a self-adhesive strength.

According to the load detection sensor unit as described above, the terminal is covered with the protective resin. Thus, the connection structure between the terminal and the signal cable is protected, and adhesion of dust to the terminal is prevented. Further, the protective resin is fixed to the support plate on which a part of the load detection sensor is mounted. Thus, it is possible to prevent the protective resin from moving relative to the support plate by vibrations or the like and prevent bending and stretching of the load detection sensor caused by the movement of the protective resin as described above. Thus, even under an environment where vibrations are applied, it is possible to prevent a break caused by bending and stretching of the load detection sensor and achieve the load detection sensor unit having high durability. Another member may be interposed between the pressure sensitive element and the support plate. Further, the protective resin is fixed to the support plate by a self-adhesive strength. Thus, the protective resin can be easily fixed to the support plate without a locking mechanism or an adhesive layer.

It is preferable that the terminal is located in a region that does not overlap the support plate.

In this case, even when the support plate is made of a conductive material such as metal, a short circuit between the terminal and the support plate can be prevented.

It is preferable that, in sectional view of a part including the terminal in the load detection sensor, the protective resin covers an outer periphery of the part.

With such a configuration, the protective resin more firmly closely adheres to the load detection sensor. Accordingly, it is possible to more firmly protect the terminal.

It is preferable that, in sectional view of a position where the protective resin is fixed to the support plate, the protective resin covers outer peripheries of the support plate and the load detection sensor that are stacked on each other.

In this case, it is possible to more firmly fix the protective resin to the support plate.

It is preferable that the load detection sensor includes a main block on which the pressure sensitive element is disposed and a tail block on which the terminal and a wiring line that connects the pressure sensitive element to the terminal are disposed, the support plate includes a main block mounting part on which the main block is mounted and a tail block mounting part on which a part of the tail block is mounted, the tail block mounting part extending from the main block mounting part, and the protective resin is fixed to an end of the tail block mounting part at the side opposite to the main block mounting part.

Since the load detection sensor includes the tail block, the terminal can be disposed at the position away from the pressure sensitive element. In such a case, since the support plate includes the tail block mounting part, even when the tail block of the load detection sensor is long, it is possible to support the tail block. Further, the protective resin is fixed to the end of the tail block. Thus, the protective resin can be fixed to a part closest to the terminal in the support plate. Thus, it is possible to reduce the amount of the protective resin and more reliably prevent the protective resin from moving relative to the support plate by vibrations or the like.

It is preferable that the support plate includes an opening, the terminal is located inside the opening in plan view of the support plate, and a part of the protective resin is disposed inside the opening and fixed to at least a part of an edge of the opening.

With such a configuration, even when another member comes into contact with the load detection sensor unit along the plane direction of the support plate, it is possible to prevent the other member from coming into contact with the protective resin. Thus, it is possible to prevent detachment of the protective resin from the support plate caused by contact of the other member.

It is preferable that the protective resin is fixed to the entire edge of the opening.

In this case, the protective resin can be more firmly fixed to the support plate. In particular, when the protective resin is fixed to one face on which the load detection sensor is mounted, the other face, and the side face of the support plate, the protective resin can be further more firmly fixed to the support plate. Even when a force perpendicular to the plane direction of the support plate is applied to the protective resin, it is possible to prevent detachment of the protective resin from the support plate.

It is preferable that a bent part bent in a direction different from a plane direction of the support plate is formed in at least a part of an edge part of the support plate.

Such a bent part can function as a reinforcing part of the support plate. Thus, even when a stress is applied to the support plate during load detection, it is possible to prevent the support plate from unintentionally bending by forming the bent part.

It is preferable that the bent part is located inside the protective resin.

In this case, it is possible to more firmly fix the protective resin to the support plate and prevent detachment of the protective resin from the support plate.

It is preferable that a pressing member including a pressure receiving surface that receives a pressing force from the seat cushion and a pressing part that presses the pressure sensitive element is further included, and the pressing member includes a rib inserted into a hole formed on the support plate through the load detection sensor.

In this case, the relative position between the support plate and the load detection sensor in the plane direction of the support plate is defined by the rib, and misalignment of the load detection senor with respect to the support plate can be prevented by the protection resin and the rib.

As described above, according to the present invention, it is possible to provide the load detection sensor unit having high durability.

### Brief Description of Drawings

Fig. 1 is a diagram illustrating a load detection sensor unit in a first embodiment.
Fig. 2 is an exploded view of the load detection sensor unit of Fig. 1.
Fig. 3 is a sectional view of the load detection sensor unit attached to S springs.
Fig. 4 is an exploded view of a load detection sensor.
Fig. 5 is a sectional view of a protective resin fixed to a support plate.
Fig. 6 is a sectional view of the protective resin fixed to the support plate in a plane perpendicular to Fig. 5.
Fig. 7 is a diagram schematically illustrating a state of the support plate which is disposed between spring parts of opposed two S springs in plan view of the upper parts of the S springs.
Fig. 8 is a diagram schematically illustrating a state of the support plate which is disposed between opposed spring parts of one S spring in plan view of the upper part of the S spring.
Fig. 9 is a diagram illustrating an ON state of the load detection sensor.
Fig. 10 is a diagram illustrating a load detection sensor unit in a second embodiment.
Fig. 11 is an exploded view of the load detection sensor unit of Fig. 10.
Fig. 12 is a sectional view of a protective resin fixed to a support plate.
Fig. 13 is a diagram illustrating a support plate in a modification.
Fig. 14 is a sectional view of a protective resin fixed to the support plate in the modification.

### Description of Embodiments

Hereinbelow, preferred embodiments of a load detection sensor unit according to the present invention will be described in detail with reference to the drawings. In order to facilitate understanding, a scale of each of the drawings may differ from a scale in the following description.

### First Embodiment

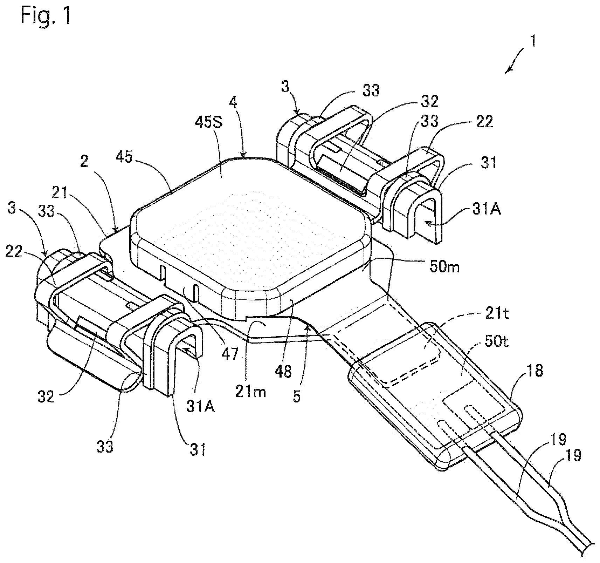

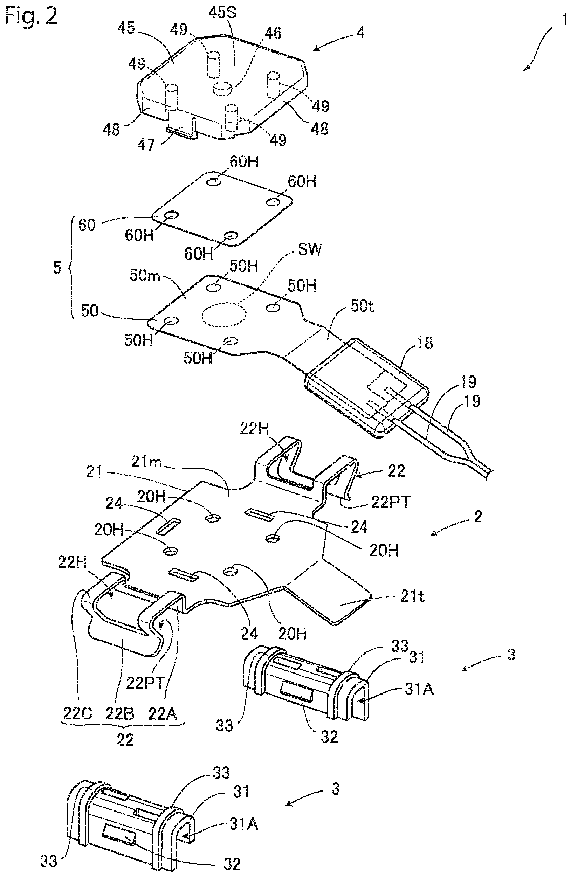

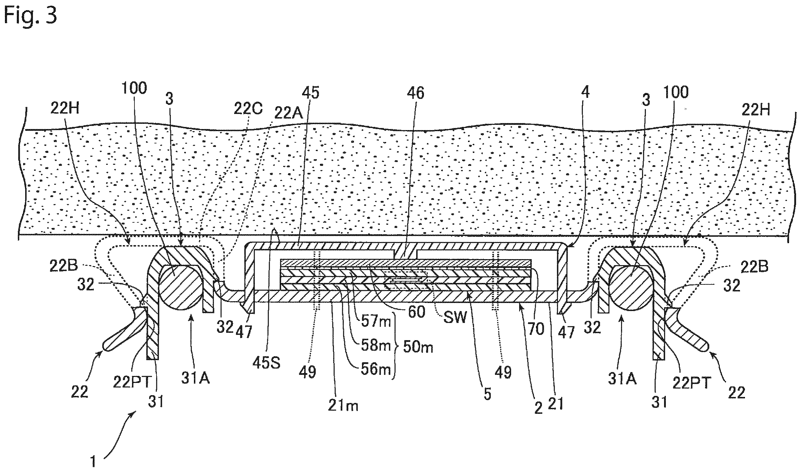

Fig. 1 is a diagram illustrating a load detection sensor unit in the present embodiment. Fig. 2 is an exploded view of the configuration of the load detection sensor unit of Fig. 1. Fig. 3 is a sectional view of the load detection sensor unit attached to S springs of a seat device. As illustrated in Figs. 1 to 3, the load detection sensor unit 1 includes, as principal elements, a support plate 2, a pair of shock absorbing members 3, an upper case 4, and a load detection sensor 5.

As illustrated in Fig. 2, the support plate 2 includes a mounting part 21 on which the load detection sensor 5 is mounted and a pair of hook parts 22 which is coupled to the mounting part 21. The mounting part 21 includes a main block mounting part 21m which is wide, and a tail block mounting part 21t which extends from the main block mounting part 21m and is narrower than the main block mounting part 21m. In the present embodiment, the hook parts 22 are coupled to the main block mounting part 21m. Further, in the present embodiment, the mounting part 21 and the pair of hook parts 22 are integrally formed by bending a metal plate. The thickness of the support plate 2 is, for example, 0.8 mm.

A main block 50m is disposed on a face of the main block mounting part 21m, the face facing a seat cushion SC. A switch SW which serves as a pressure sensitive sensor in the load detection sensor 5 (described below) is disposed on the main block 50m. As illustrated in Fig. 2, the main block mounting part 21m includes a plurality of through holes 20H each of which penetrates the support plate 2 and has a circular shape and a plurality of case locking openings 24 each of which has a substantially rectangular shape.

A plurality of S springs 100 are stretched side by side in an opening of a seat frame of the seat device of a vehicle. As illustrated in Fig. 3, the main block mounting part 21m has a size that enables the main block mounting part 21m to be disposed between opposed two of the S springs 100. The S spring 100 is a spring that meanders in a zigzag shape.

The tail block mounting part 21t has a substantially rectangular shape and extends in a direction substantially perpendicular to a direction connecting the pair of hook parts 22 in plan view of the main block mounting part 21m. Further, the tail block mounting part 21t is coupled to the main block mounting part 21m with a plane direction of the tail block mounting part 21t inclined with respect to a plane direction of the main block mounting part 21m by bending of the metal plate. A tail block 50t is disposed on a face of the tail block mounting part 21t, the face facing the seat cushion SC. A wiring line is disposed on the tail block 50t in the load detection sensor 5 (described below). In the present embodiment, the width of the tail block mounting part 21t in a direction perpendicular to the extending direction is smaller than the width of the tail block 50t of the load detection sensor 5. The length of the tail block mounting part 21t in the extending direction is smaller than the length of the tail block 50t of the load detection sensor 5.

The main block mounting part 21m includes side face parts which are opposed to each other with the main block mounting part 21m interposed therebetween. The pair of hook parts 22 are coupled to the respective side face parts of the main block mounting part 21m. The pair of hook parts 22 are hooked on the respective spring parts which are parts of two S springs 100 opposed to each other, respectively.

The pair of hook parts 22 have the same configuration. Each of the hook parts 22 includes an inner wall part 22A, an outer wall part 22B, and an upper wall part 22C. A part of the S spring 100 is disposed in a space surrounded by the inner wall part 22A, the outer wall part 22B, and the upper wall part 22C. The shock absorbing member 3 is disposed between the part of the S spring 100 and the inner wall part 22A, the outer wall part 22B and the upper wall part 22C. That is, each of the hook parts 22 is configured to hook and lock the spring part by the inner wall part 22A, the outer wall part 22B, and the upper wall part 22C with the shock absorbing member 3 interposed therebetween.

The inner wall part 22A extends in a direction substantially perpendicular to the main block mounting part 21m, and is coupled to the main block mounting part 21m. The upper wall part 22C is located above a mounting surface of the main block mounting part 21m, extends substantially parallel to the mounting surface, and is coupled to the inner wall part 22A. The outer wall part 22B extends obliquely to a direction perpendicular to the mounting surface of the main block mounting part 21m on the mounting surface side and comes closer to the main block mounting part 21m toward the tip thereof. In the present embodiment, an opening 22H is formed from the inner wall part 22A through the outer wall part 22B.

The hook part 22 has elasticity. When the shock absorbing member 3 is disposed in the space surrounded by the inner wall part 22A, the upper wall part 22C, and the outer wall part 22B as described above, the inner wall part 22A, the upper wall part 22C, and the outer wall part 22B come into contact with a part of the shock absorbing member 3. A pressing part 22PT is formed under the outer wall part 22B. The pressing part 22PT is bent in a manner projecting toward the main block mounting part 21m. A force pressing the shock absorbing member 3 against the main block mounting part 21m acts by the elasticity of the hook part 22. In this manner, the inner wall part 22A, the outer wall part 22B, and the upper wall part 22C of the hook part 22 extend covering a part of the S spring 100, and are capable of fixing the S spring 100 from three directions: the upper side; the main block mounting part 21m side; and the side opposite to the main block mounting part 21m with the shock absorbing member 3 interposed therebetween.

Each of the shock absorbing members 3 softens contact between the support plate 2 and the S spring 100. Each of these shock absorbing members 3 is disposed in the space surrounded by the inner wall part 22A, the outer wall part 22B, and the upper wall part 22C in the hook part 22 of the support plate 2 as described above.

Each of the shock absorbing members 3 includes a shock absorbing body 31, a pair of locking claws 32, and a pair of guides 33. The shock absorbing body 31, the locking claws 32, and the guides 33 are formed by integral molding.

The shock absorbing body 31 has a cross section having a substantially inverted U shape and includes a groove 31A with which a part of the S spring 100 can be fitted. In a state where the S spring 100 is disposed inside the groove 31A, the S spring 100 is sandwiched by inner walls of the shock absorbing body 31, the inner walls forming the groove 31A, and fitted with the shock absorbing body 31.

The locking claws 32 are formed on an outer side wall of the shock absorbing body 31 at the main block mounting part 21m side and the side opposite to the main block mounting part 21m. The locking claw 32 formed on the side wall at the main block mounting part 21m side can be hooked on an edge of the inner wall part 22A, the edge being adjacent to the opening 22H, in a state where the shock absorbing body 31 is disposed in the space surrounded by the inner wall part 22A, the outer wall part 22B, and the upper wall part 22C of the hook part 22. The locking claw 32 formed on the side wall at the side opposite to the main block mounting part 21m can be hooked on an edge of the outer wall part 22B, the edge being adjacent to the opening 22H, in a state where the shock absorbing body 31 is disposed in the space.

The pair of guides 33 is formed on the outer side wall of the shock absorbing body 31 from the main block mounting part 21m side to the side opposite to the main block mounting part 21m. The distance between the guides 33 is substantially equal to the width of the hook part 22. The hook part 22 is sandwiched by the pair of guides 33 in a state where the shock absorbing body 31 is disposed in the space surrounded by the inner wall part 22A, the outer wall part 22B, and the upper wall part 22C of the hook part 22. Thus, in a state where the shock absorbing member 3 is attached to the hook part 22, misalignment between the shock absorbing member 3 and the hook part 22 is prevented.

Further, in a state where the S spring 100 is fitted with the groove 31A of the shock absorbing body 31, the support plate 2 and the S spring 100 are fixed in a certain positional relationship with the shock absorbing member 3 interposed therebetween. In this state, the support plate 2 and the S spring 100 are firmly fixed by pressing the shock absorbing member 3 against the S spring 100 by the pressing part 22PT of the hook part 22.

The shock absorbing member 3 has a hardness lower than the hardness of the support plate 2. Examples of a material of the shock absorbing member 3 include acrylonitrile-butadiene-styrene copolymer synthetic resin (ABS), polyamide (PA), polypropylene (PP), and polyacetal (POM). Further, examples of a material of the support plate 2 include spring steel and a stainless material.

The Rockwell hardness of the shock absorbing member 3 is preferably approximately HRR30 to HRR120. The Rockwell hardness of the support plate 2 is preferably approximately HRB80 to HRC68. When the Rockwell hardness of the shock absorbing member 3 is within the range of HRR30 to HRR120, it is possible to further reduce unusual noise produced by contact between the support plate 2 and the S spring 100 and prevent deformation of the shock absorbing member caused by a load. Thus, this range is preferred. When the Rockwell hardness of the support plate 2 is within the range of HRB80 to HRC68, the support plate 2 is softer than the S spring 100 and also has a sufficient durability. Thus, this range is preferred.

The upper case 4 is a member that covers the main block 50m which is mounted on the main block mounting part 21m of the mounting part 21 to protect the switch SW of the main block 50m. As illustrated in Fig. 3, the upper case 4 also serves as a pressing member that presses the switch SW of the load detection sensor 5 by being pressed by the seat cushion SC.

The upper case 4 includes a top wall 45 and a frame wall 48. In the present embodiment, the top wall 45 is a plate-like member having a substantially rectangular shape. The frame wall 48 of the upper case 4 is divided into a plurality of parts and connected to the top wall 45 along the outer periphery of the top wall 45. Hook pieces 47 are connected to the top wall 45 between the divided parts of the frame wall 48. The hook pieces 47 are fitted into the respective case locking openings 24 of the main block mounting part 21m of the support plate 2. A relative movement between the support plate 2 and the upper case 4 in the mounting surface direction of the main block mounting part 21m is restricted by fitting the hook pieces 47 into the respective case locking openings 24.

The top wall 45 of the upper case 4 includes a pressing part 46 which projects from a bottom face of the top wall 45 at the side facing the mounting part 21 of the support plate 2. The tip of the pressing part 46 has a planar shape. The tip of the pressing part 46 may have a projecting curved surface shape.

Further, the top wall 45 of the upper case 4 includes a plurality of ribs 49 each of which projects from the bottom face of the top wall 45 at the same side as the pressing part 46. The ribs 49 are formed at positions overlapping the through holes 20H which are formed on the mounting part 21 of the support plate 2. In a state where the upper case 4 covers the load detection sensor 5 which is mounted on the mounting part 21 of the support plate 2, and the hook pieces 47 are fitted in the respective case locking openings 24, each of the ribs 49 is inserted in the corresponding one of the through holes 20H. Accordingly, even when the load detection sensor 5 is not bonded to the mounting part 21, a relative movement between the switch SW of the load detection sensor 5 and the pressing part 46 of the upper case 4 in the mounting surface direction is restricted. In the case of the present embodiment, in a state where the upper case 4 covers the load detection sensor 5 which is mounted on the mounting part 21, and each of the hook pieces 47 is fitted in the corresponding one of the case locking openings 24, the tip of the pressing part 46 is in contact with the load detection sensor 5. However, the tip of the pressing part 46 may not be in contact with the load detection sensor 5.

The upper case 4 is formed of a material harder than the seat cushion SC. Thus, the pressing part 46 which is a part of the upper case 4 is also formed of the material harder than the seat cushion SC. Typically, the seat cushion SC is made of a foamed urethane resin. Thus, examples of the material of the upper case 4 include resins such as polycarbonate (PC), polyimide (PI), polybutylene terephthalate (PBT), a phenol resin, and an epoxy resin.

In a state where the load detection sensor unit 1 as described above is attached to the pair of S springs 100 as illustrated in Fig. 3, an upper face 45S of the top wall 45 of the upper case 4 faces a lower face of the seat cushion SC with a predetermined distance therebetween. The upper face 45S has a planar shape. The upper face 45S is a pressure receiving surface which receives pressing from the seat cushion SC. The area of the upper face 45S is larger than the area of a part of the pressing part 46, the part coming into contact with the switch SW of the load detection sensor 5.

The load detection sensor 5 is a sheet-like sensor including the switch SW as a pressure sensitive sensor. The load detection sensor 5 includes a switch sheet 50 having flexibility, a metal plate 60, and an adhesive layer 70 which bonds the switch sheet 50 and the metal plate 60 together. The switch sheet 50 and the metal plate 60 are bonded together with the adhesive layer 70.

The switch sheet 50 is a membrane switch, and includes the main block 50m which has a substantially rectangular shape, and the tail block 50t which is connected to the main block 50m and narrower than the main block 50m. The main block 50m is also a main block of the load detection sensor 5, and the tail block 50t is also a tail block of the load detection sensor 5. The main block 50m is provided with the switch SW. The tail block 50t is coupled to the main block 50m and extends away from the main block 50m. A through hole 50H is formed near each apex of the main block 50m.

As illustrated in Fig. 3, the metal plate 60 is bonded to one face of the switch sheet 50 with the adhesive layer 70. In the present embodiment, the metal plate 60 is bonded to a face of the main block 50m, which is a part of the switch sheet 50, at the seat cushion SC side.

The adhesive layer 70 is a layer-like member that bonds the switch sheet 50 and the metal plate 60 together. In the present embodiment, the adhesive layer 70 has a size substantially equal to the size of the metal plate 60. A material of the adhesive layer 70 may be any material that is capable of bonding the switch sheet 50 and the metal plate 60 together. Examples of the material of the adhesive layer 70 include a thermoplastic resin, a thermosetting resin, and a photo-curable resin. Further, the adhesive layer 70 may be a double-sided tape including a base material such as PET or a nonwoven fabric and adhesive layers which are formed on both faces of the base material. A glass transition point Tg of the adhesive layer 70 is preferably equal to or higher than 85°C. When the glass transition point Tg is equal to or higher than 85°C, the adhesive layer 70 is not apt to flow even under an environment with high temperature like the inside of a cabin of an automobile under a blazing sun. Thus, it is possible to prevent erroneous detection of seating caused by flowing of the adhesive layer 70.

Next, the load detection sensor 5 will be described in more detail.

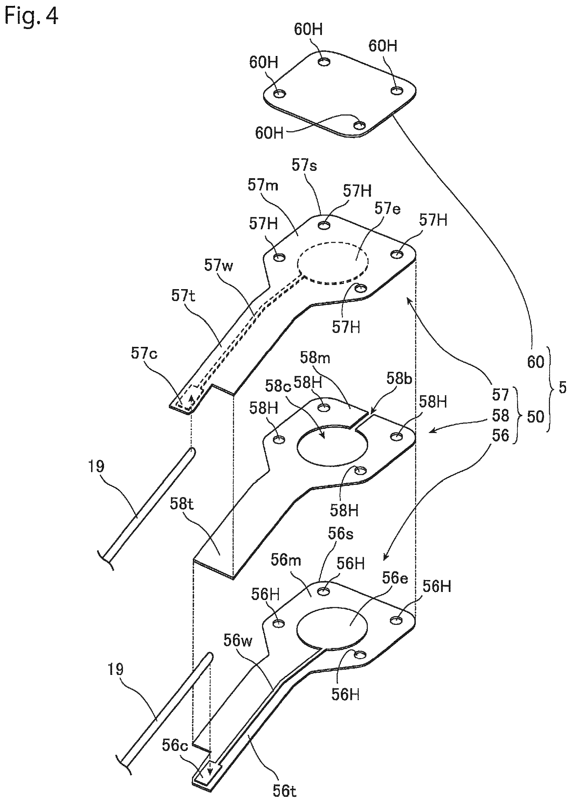

Fig. 4 is an exploded view of the load detection sensor 5. As illustrated in Fig. 4, the switch sheet 50 includes a first electrode sheet 56, a spacer 58, and a second electrode sheet 57. The first electrode sheet 56 includes, as principal elements, a first insulating sheet 56s, a first electrode 56e, and a first terminal 56c.

The first insulating sheet 56s is a resin insulating sheet having flexibility. The first insulating sheet 56s includes a main block 56m which has the same shape as the main block 50m of the switch sheet 50, and a tail block 56t which is connected to the main block 56m and has substantially the same shape as the tail block 50t of the switch sheet 50. The shape of the tail block 56t differs from the shape of the tail block 50t of the switch sheet 50 in that a tip part on the side opposite to the main block 56m is narrower than the other part of the tail block 56t. Further, the main block 56m includes through holes 56H which are formed at positions similar to the positions of the through holes 50H of the switch sheet 50. Examples of a material of the first insulating sheet 56s include resins such as polyethylene terephthalate (PET), polyimide (PI), and polyethylene naphthalate (PEN).

The first electrode 56e is disposed on one face of the main block 56m at substantially the center of the main block 56m. The first electrode 56e includes a conductor layer. For example, the first electrode 56e is a metal printed layer having a substantially circular shape. The first terminal 56c includes a conductor layer. The first terminal 56c is, for example, a metal layer having a substantially quadrangular shape. The first terminal 56c is disposed on a face of the tip part of the tail block 56t at the side having the first electrode 56e. The first electrode 56e and the first terminal 56c are electrically connected to each other through a first wiring line 56w.

The second electrode sheet 57 includes, as principal elements, a second insulating sheet 57s, a second electrode 57e, and a second terminal 57c.

As illustrated in Fig. 4, the second insulating sheet 57s is closer to the seat cushion SC than the first electrode sheet 56 is. The second insulating sheet 57s is a resin insulating sheet like the first insulating sheet 56s. In the case of the present embodiment, the second insulating sheet 57s includes a main block 57m which has the same shape as the main block 56m of the first insulating sheet 56s, and a tail block 57t which is connected to the main block 57m and has the same shape as the tail block 56t of the first insulating sheet 56s except the shape of a tip part. The tip part of the tail block 57t is narrower than the other part of the tail block 57t so that the tip part of the tail block 56t of the first insulating sheet 56s and the tip part of the tail block 57t of the second insulating sheet 57s do not overlap each other when the first insulating sheet 56s and the second insulating sheet 57s are stacked. In a manner similar to the first insulating sheet 56s, through holes 57H are formed on the main block 57m at positions similar to the positions of the through holes 50H of the switch sheet 50. Examples of a material of the second insulating sheet 57s may include resins such as PET, PI, and PEN like the first insulating sheet 56s. The material of the second insulating sheet 57s may be either differ from or the same as the material of the first insulating sheet 56s.

The second electrode 57e has a configuration similar to the configuration of the first electrode 56e. The second electrode 57e is disposed on one face of the main block 57m of the second insulating sheet 57s at substantially the center of the main block 57m. Further, the position of the second electrode 57e overlaps the first electrode 56e when the first electrode sheet 56 and the second electrode sheet 57 are stacked. The second terminal 57c has a configuration similar to the configuration of the first terminal 56c. The second terminal 57c is disposed on a face of the tip part of the tail block 57t at the side having the second electrode 57e. Further, as described above, when the first insulating sheet 56s and the second insulating sheet 57s are stacked, the tip part of the first insulating sheet 56s and the tip part of the second insulating sheet 57s do not overlap each other. Thus, the first terminal 56c and the second terminal 57c are not located between the first insulating sheet 56s and the second insulating sheet 57s, but exposed. The second electrode 57e and the second terminal 57c are electrically connected to each other through a second wiring line 57w.

The spacer 58 is a resin insulating sheet having flexibility which is disposed between the first electrode sheet 56 and the second electrode sheet 57. The spacer 58 includes a main block 58m and a tail block 58t which is connected to the main block 58m. The outer shape of the main block 58m is similar to the outer shape of the main blocks 56m, 57m of the first insulating sheet 56s and the second insulating sheet 57s. The main block 58m includes an opening 58c which is formed at the center thereof. Further, through holes 58H are formed at positions similar to the positions of the through holes 50H of the switch sheet 50 in a manner similar to the first insulating sheet 56s and the second insulating sheet 57s. The tail block 58t has the same shape as the tail blocks 56t, 57t of the first insulating sheet 56s and the second insulating sheet 57s except that the tail block 58t includes no narrow tip part.

The opening 58c has a substantially circular shape and has a diameter slightly smaller than the diameter of the first electrode 56e and the second electrode 57e. The opening 58c is formed in such a manner that the opening 58c is located inside peripheral edges of the first electrode 56e and the second electrode 57e in plan view of the spacer 58 when the spacer 58, the first electrode sheet 56, and the second electrode sheet 57 are stacked. The spacer 58 further includes a slit 58b which connects a space inside the opening 58c to a space outside the switch sheet 50. The slit 58b serves as an air vent when the first electrode sheet 56, the spacer 58, and the second electrode sheet 57 are stacked. The opening 58c may be located outside the peripheral edges of the first electrode 56e and the second electrode 57e in plan view of the spacer 58 when the spacer 58, the first electrode sheet 56, and the second electrode sheet 57 are stacked.

Examples of a material of the spacer 58 may include resins such as PET, PI, and PEN like the first insulating sheet 56s and the second insulating sheet 57s. The material of the spacer 58 may be either different from or the same as the material of the first insulating sheet 56s or the second insulating sheet 57s. An adhesive (not illustrated) for adhesion with the first electrode sheet 56 and the second electrode sheet 57 is applied to both faces of the spacer 58.

In a state where the first electrode sheet 56, the spacer 58, and the second electrode sheet 57 are bonded in this order, the first electrode 56e and the first wiring line 56w of the first electrode sheet 56 and the second electrode 57e and the second wiring line 57w of the second electrode sheet 57 are located between the first insulating sheet 56s and the second insulating sheet 57s. The first electrode 56e and the second electrode 57e face each other through the opening 58c to constitute the switch SW which is a pressure sensitive element. In a state where the first electrode sheet 56, the spacer 58, and the second electrode sheet 57 are stacked, the through holes 56H, 57H, 58H overlap each other to form the through holes 50H of the switch sheet 50.

Signal cables 19 which are connected to a control device (not illustrated) are connected to the first terminal 56c and the second terminal 57c of the switch sheet 50. The first terminal 56c and the second terminal 57c are connected to the respective signal cables 19 with a conductive paste or by soldering.

The metal plate 60 is made of a metal plate material having a flexibility lower than the flexibility of the switch sheet 50. The material of the metal plate 60 is not particularly limited to any material. Examples of the material of the metal plate 60 include copper and stainless steel. In the case of the present embodiment, the metal plate 60 has substantially the same shape as the main block 50m of the switch sheet 50.

The metal plate 60 includes through holes 60H which are formed at positions similar to the positions of the through holes 50H of the switch sheet 50. When the switch sheet 50 and the metal plate 60 are stacked, the through holes 50H of the switch sheet 50 overlap the respective through holes 60H of the metal plate 60. Further, when the switch sheet 50 and the metal plate 60 are stacked, the metal plate 60 is bonded to a face of the switch sheet 50 at the seat cushion side so as to cover the switch SW of the switch sheet 50 with the adhesive layer 70 interposed therebetween.

As illustrated in Fig. 2, in the load detection sensor 5 having the above configuration, a part of the switch sheet 50 is disposed on the mounting part 21 of the support plate 2. Specifically, the main block 50m of the switch sheet 50 which includes the switch SW is located on the main block mounting part 21m of the support plate 2, and the tail block 50t of the switch sheet 50 is located on the tail block mounting part 21t of the support plate 2. In this manner, the switch SW, which is the pressure sensitive element, is mounted on the support plate 2. Further, the first terminal 56c and the second terminal 57c which are disposed on the tail block 50t lie off the tail block mounting part 21t. Thus, the first terminal 56c and the second terminal 57c are located in a region that does not overlap the support plate 2. The signal cables 19 which are connected to the first terminal 56c and the second terminal 57c of the switch sheet 50 are led out away from the support plate 2.

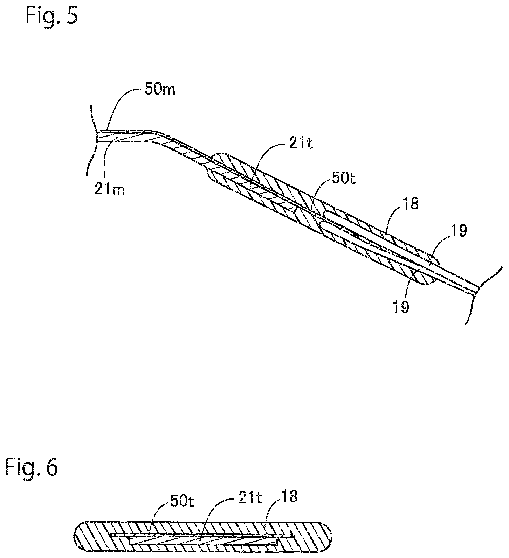

In this manner, in a state where the load detection sensor 5 is disposed on the support plate 2, an end of the tail block 50t of the switch sheet 50, the end including the first terminal 56c and the second terminal 57c to which the signal cables 19 are connected, and an end of the tail block mounting part 21t of the support plate 2 are covered with a protective resin 18 as illustrated in Fig. 1. That is, in sectional view of a part including the first terminal 56c and the second terminal 57c in the load detection sensor 5, the protective resin 18 covers the outer periphery of the part. In Fig. 2, the protective resin 18 covering the first terminal 56c and the second terminal 57c is separated from the support plate 2. Fig. 2 is not a diagram illustrating an assembled state, but an exploded view. Thus, Fig. 2 illustrates a state where the protective resin 18 is separated from the support plate 2. Fig. 5 is a sectional view of the protective resin fixed to the support plate, specifically, a sectional view in a plane along the longitudinal direction of the tail block mounting part 21t. Fig. 6 is a sectional view of the protective resin fixed to the support plate in a plane perpendicular to Fig. 5. As illustrated in Figs. 1 and 5, the protective resin 18 covers the part including the first terminal 56c and the second terminal 57c in the load detection sensor 5 and the end of the tail block mounting part 21t at the side opposite to the main block mounting part 21m. As is obvious from Fig. 6, in sectional view of the position where the protective resin 18 is fixed to the support plate 2, the protective resin 18 covers the outer peripheries of the support plate 2 and the load detection sensor 5 which are stacked on each other. That is, the protective resin 18 covers the outer periphery of a stacked body of the support plate 2 and the load detection sensor 5. As is obvious from Figs. 1, 5, and 6, the protective resin 18 has a substantially rectangular parallelepiped shape whose corners are chamfered. The longitudinal direction of the rectangular parallelepiped is aligned with the longitudinal direction of the tail block 50t. A face having the largest area in the rectangular parallelepiped is substantially parallel to a principal face of the tail block 50t. Further, in the present embodiment, the protective resin 18 covers half or more of the tail block 50t in the longitudinal direction. A part of the tail block 50t at the main block 50m side is exposed from the protective resin 18. In this manner, the protective resin 18 is fixed to the tail block mounting part 21t of the support plate 2 by a self-adhesive strength. Covering the first terminal 56c and the second terminal 57c with the protective resin 18 prevents detachment of the signal cables 19 from the first terminal 56c and the second terminal 57c and prevents a short circuit in the first terminal 56c and the second terminal 57c caused by conductive dust or the like.

The protective resin 18 is made of, for example, a polyamide, polyimide, olefin, urethane, or acrylic thermoplastic resin or a photo-curable resin.

As described above, in a state where the load detection sensor 5 mounted on the support plate 2 is covered with the upper case 4, and the hook pieces 47 are fitted in the respective case locking openings 24, the tip of the pressing part 46 is in contact with the position that overlaps the switch SW in the metal plate 60 of the load detection sensor 5. Further, in this state, each of the ribs 49 is inserted through the corresponding through hole 60H of the metal plate 60, the corresponding through hole 50H of the switch sheet 50, and the corresponding through hole 20H of the support plate 2. Thus, even in a state where the support plate 2 and the first insulating sheet 56s are not bonded together, a relative movement between the switch SW of the load detection sensor 5 and the pressing part 46 of the upper case 4 is restricted. That is, it can be understood that the ribs 49 are movement restriction members that restrict a relative movement between the switch sheet 50 and the support plate 2 in the plane direction of the support plate 2.

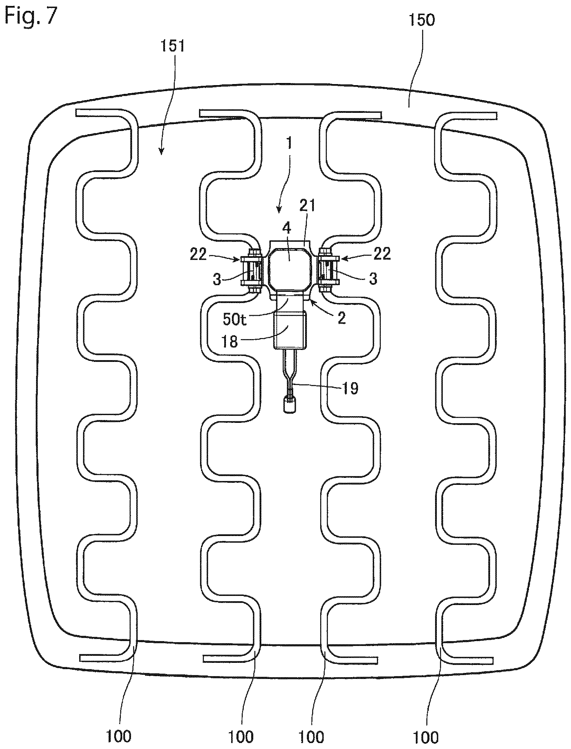

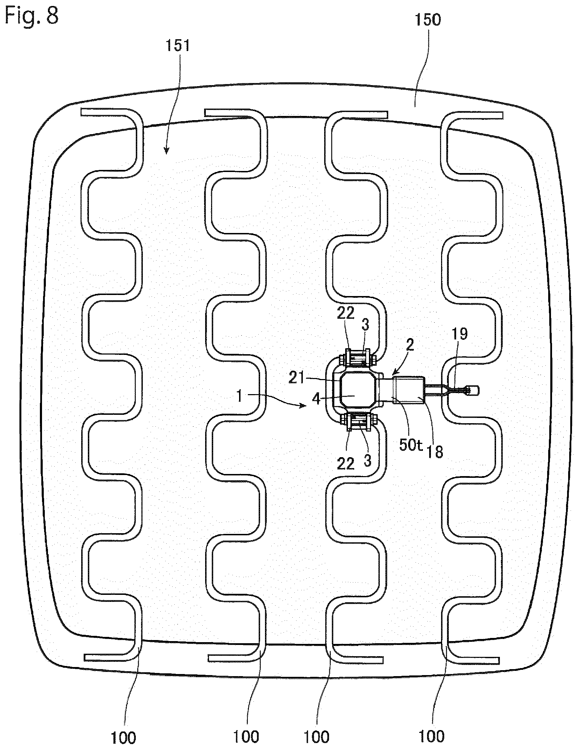

The load detection sensor unit 1 having such a configuration is attached to the S spring 100 as described above. Fig. 3 is a sectional view illustrating such a state as described above. As illustrated in Fig. 7, the load detection sensor unit 1 can be attached to the seat by fixing the hook parts 22 of the support plate 2 to the respective opposed two of the S springs 100 which are stretched side by side in the opening 151 of the seat frame 150 with the respective shock absorbing members 3 interposed therebetween. Further, as illustrated in Fig. 8, the load detection sensor unit 1 may be attached to the seat by fixing the hook parts 22 of the support plate 2 to respective opposed parts in one of the S springs 100 which are stretched side by side in the opening 151 of the seat frame 150 with the respective shock absorbing members 3 interposed therebetween.

Next, detection of seating by the load detection sensor unit 1 of the present embodiment will be described.

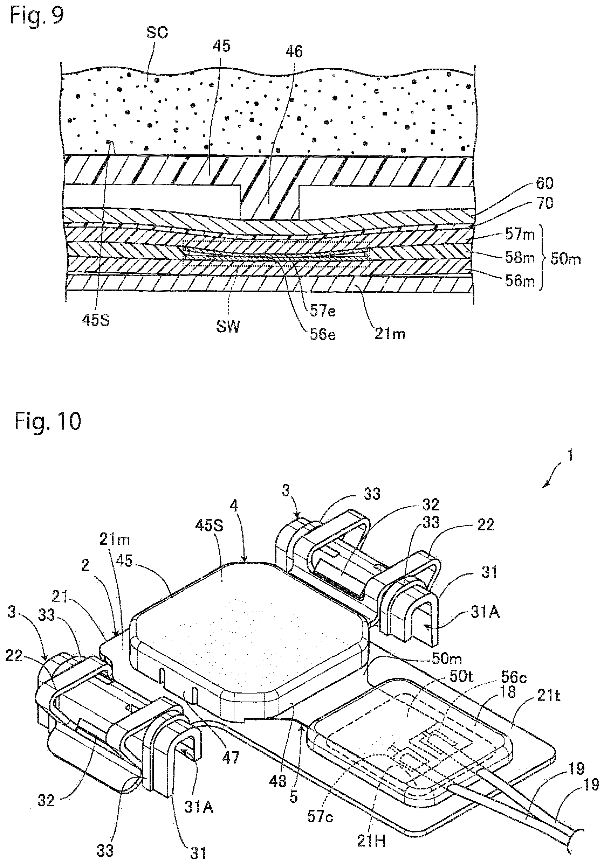

Fig. 9 is a diagram illustrating an ON state of the load detection sensor 5. When a person is seated on the seat device, the lower face of the seat cushion SC moves downward. The lower face of the seat cushion SC comes into contact with the upper face 45S of the upper case 4 and presses the upper face 45S. Then, when the lower face of the seat cushion SC further moves downward, the tip of the pressing part 46 presses the metal plate 60, and the main block 57m of the second insulating sheet 57s is also bent by bending of the metal plate 60 as illustrated in Fig. 9. Thus, the second electrode 57e comes into contact with the first electrode 56e to bring the switch SW of the load detection sensor 5 into an ON state. Then, the vehicle control unit (not illustrated) connected to the signal cables 19 detects the seating. At this time, in the present embodiment, since the face of the main block 56m of the first insulating sheet 56s at the support plate side is not bonded to the support plate 2, at least a peripheral part of the switch SW is deformable following the bending of the metal plate 60. Thus, the switch SW is easily turned ON.

As described above, the load detection sensor unit 1 of the present embodiment includes the sheet-like load detection sensor 5 which includes the switch SW, which is the pressure sensitive element, and the first terminal 56c and the second terminal 57c which are electrically connected to the switch SW, the support plate 2 on which the switch SW is mounted, and the protective resin 18 which covers the first terminal 56c and the second terminal 57c. The first terminal 56c and the second terminal 57c are located in the region that does not overlap the support plate 2. The protective resin 18 is fixed to the support plate 2.

Covering the first terminal 56c and the second terminal 57c with the protective resin protects a connection structure between the first terminal 56c and the second terminal 57c and the signal cables 19 and prevents dust from adhering to the first terminal 56c and the second terminal 57c. Further, the protective resin 18 is fixed to the support plate 2 on which a part of the load detection sensor 5 is mounted. Thus, it is possible to prevent the protective resin 18 from moving relative to the support plate 2 by vibrations or the like. Thus, it is possible to prevent partial bending and stretching in the load detection sensor 5 caused by a movement of the protective resin 18. Thus, even under an environment where vibrations are applied, it is possible to prevent a break caused by bending and stretching of the load detection sensor 5 and achieve high durability.

Further, in the present embodiment, when the part including the first terminal 56c and the second terminal 57c in the load detection sensor 5 is viewed in the plane direction, the protective resin 18 covers the part. Thus, the protective resin 18 more firmly closely adheres to the load detection sensor 5. Accordingly, it is possible to more firmly protect the first terminal 56c and the second terminal 57c.

Further, in the present embodiment, the load detection sensor 5 includes the main block 50m on which the switch SW is disposed and the tail block 50t on which the first terminal 56c, the second terminal 57c, the first wiring line 56w, and the second wiring line 57w are disposed. The support plate 2 includes the main block mounting part 21m on which the main block 50m is mounted and the tail block mounting part 21t on which a part of the tail block 50t is mounted. Since the load detection sensor 5 includes the tail block 50t, the first terminal 56c and the second terminal 57c can be disposed at the position away from the switch SW. In such a case, since the support plate 2 includes the tail block mounting part 21t, even when the tail block 50t of the load detection sensor 5 is long, it is possible to support the tail block 50t. Further, the protective resin 18 is fixed to the end of the tail block mounting part 21t at the side opposite to the main block mounting part 21m. Thus, the protective resin 18 can be fixed to a part closest to the first terminal 56c and the second terminal 57c in the support plate 2. Thus, it is possible to reduce the amount of the protective resin 18 and more reliably prevent the protective resin 18 from moving relative to the support plate 2 by vibrations or the like.

Further, in the present embodiment, when the end of the tail block mounting part 21t is viewed in the plane direction, the protective resin 18 covers the part including the first terminal 56c and the second terminal 57c in the load detection sensor 5 and the end opposite to the main block mounting part 21m in the tail block mounting part 21t. Thus, the protective resin 18 is more firmly fixed to the support plate 2.

When the protective resin 18 is made of a hot melt adhesive, the protective resin 18 can be easily fixed to the support plate 2 by heat.

Further, in the present embodiment, the load detection sensor unit 1 includes the upper case which includes the upper face 45S which is a pressure receiving surface for receiving a pressing force from the seat cushion SC and the pressing part 46 which presses the switch SW. The upper case 4 as the pressing member includes the ribs 49 which are inserted into the respective through holes 20H formed on the support plate 2 through the load detection sensor 5. Thus, the relative position between the support plate 2 and the load detection sensor 5 in the plane direction of the support plate 2 is defined by the ribs 49, and misalignment of the load detection sensor 5 with respect to the support plate 2 can be prevented by the protective resin 18 and the ribs 49.

### Second Embodiment

Next, a second embodiment of the present invention will be described with reference to Figs. 10 to 12. In the description of the present embodiment, an element that is identical or equivalent to the element of the first embodiment will be designated by the same reference sign as the first embodiment, and redundant description will be omitted unless the element is particularly described.

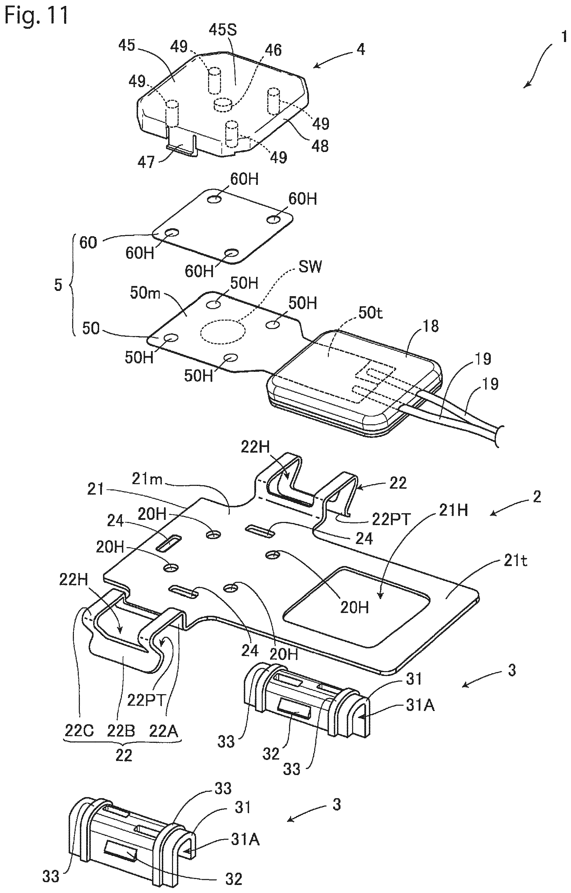

Fig. 10 is a diagram illustrating a load detection sensor unit in the present embodiment. Fig. 11 is an exploded view of the load detection sensor unit of Fig. 10. As illustrated in Fig. 11, in the load detection sensor unit 1 of the present embodiment, the shape of a support plate 2 differs from the shape of the support plate 2 of the first embodiment. As illustrated in Figs. 10 and 11, in the support plate 2 of the present embodiment, the width of a tail block mounting part 21t is substantially equal to the width of a main block mounting part 21m. The tail block mounting part 21t of the first embodiment is coupled to the main block mounting part 21m with the plane direction of the tail block mounting part 21t inclined with respect to the plane direction of the main block mounting part 21m. On the other hand, the tail block mounting part 21t of the present embodiment is flush with the main block mounting part 21m and coupled to the main block mounting part 21m with the plane direction of the tail block mounting part 21t uninclined with respect to the plane direction of the main block mounting part 21m. Further, in the present embodiment, an opening 21H is formed in the tail block mounting part 21t. The opening 21H has a substantially rectangular shape and has a width larger than the width of a tail block 50t of a switch sheet 50. The opening 21H is formed in such a manner that a first terminal 56c and a second terminal 57c are located inside the opening 21H in plan view of the support plate 2 when the switch sheet 50 is disposed on the support plate.

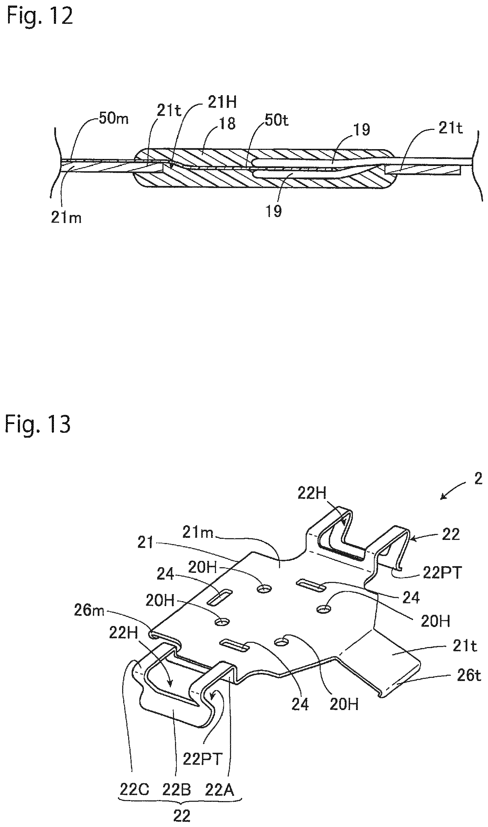

Since the opening 21H is formed at the position as described above, when a load detection sensor 5 is disposed on the support plate 2 in a manner similar to the first embodiment, the first terminal 56c and the second terminal 57c are located inside the opening 21H in plan view of the support plate 2 as illustrated in Fig. 11. In the present embodiment, in a state where the load detection sensor 5 is disposed in this manner, the first terminal 56c and the second terminal 57c are covered with a protective resin 18. Fig. 12 is a sectional view of the protective resin 18 of the present embodiment fixed to the support plate 2. Specifically, Fig. 12 is a sectional view when the tail block mounting part 21t is viewed in the plane direction. As illustrated in Figs. 10 and 12, the protective resin 18 covers a part including the first terminal 56c and the second terminal 57c in the load detection sensor 5 and the whole circumference of a peripheral edge of the opening 21H in the tail block mounting part 21t. Specifically, the protective resin 18 covers a part around the opening 21H on one face of the tail block mounting part 21t on which the load detection sensor 5 is disposed, a part around the opening 21H on the other face opposite to the one face, and an inner side face of the opening 21H. In this manner, the protective resin 18 is fixed to the tail block mounting part 21t of the support plate 2. In Fig. 11, the protective resin 18 covering the first terminal 56c and the second terminal 57c is separated from the support plate 2. Fig. 11 is not a diagram illustrating an assembled state, but an exploded view. Thus, Fig. 11 illustrates a state where the protective resin 18 is separated from the support plate 2.

As described above, in the load detection sensor unit 1 of the present embodiment, the opening 21H is formed in the support plate 2, the first terminal 56c and the second terminal 57c are located inside the opening 21H in plan view of the support plate 2, and a part of the protective resin 18 is disposed inside the opening 21H and fixed to at least a part of the edge of the opening 21H. Thus, even when another member comes into contact with the load detection sensor unit along the plane direction of the support plate 2, the other member comes into contact with the support plate 2 and is prevented from coming into contact with the protective resin 18. Thus, it is possible to prevent detachment of the protective resin 18 from the support plate 2 caused by contact of the other member.

Further, the protective resin 18 is fixed to the entire edge of the opening 21H. Thus, the protective resin 18 is more firmly fixed to the support plate 2. Further, in the present embodiment, the protective resin 18 is fixed to one face on which the load detection sensor 5 is mounted, the other face, and the side face of the support plate 2. Thus, even when a force perpendicular to the plane direction of the support plate 2 is applied to the protective resin 18, it is possible to prevent detachment of the protective resin 18 from the support plate. In the present embodiment, the protective resin 18 is fixed to the entire edge of the opening 21H. However, the protective resin 18 may be fixed to a part of the edge of the opening 21H. Further, the protective resin 18 may be fixed to only either one face or the other face of the support plate.

The load detection sensor unit of the present invention has been described above taking the above embodiments as examples. However, the present invention is not limited to the above embodiments.

For example, although the upper case 4 is provided in the above first embodiment, the upper case 4 may not be provided in the seating sensor unit of the present invention. Further, although the load detection sensor 5 includes the metal plate 60, the metal plate 60 is not an essential element. However, when the pressing part 46 directly presses the switch SW, creep is prone to occur in the second electrode 57e pressed by the pressing part 46. The creep is more prone to occur when an environmental temperature around the load detection sensor unit 1 is higher. Thus, as described in the above embodiments, the metal plate 60 is preferably disposed on the second electrode sheet 57. The metal plate 60 is capable of preventing the occurrence of the creep. The flexibility of metal does not change much as described above even when the temperature changes. Thus, even when the environmental temperature changes, the way of bending of the metal plate 60 pressed by the pressing part 46 does not change much. Thus, according to the load detection sensor unit, it is possible to prevent a change in load detection caused by the environmental temperature.

Further, although the load detection sensor 5 is directly mounted on the support plate 2 in the above embodiments, the present invention is not limited thereto. For example, a housing may be disposed on the support plate 2, the main block 50m of the load detection sensor 5 may be disposed on the housing, and the tail block 50t may be led out from the housing.

Further, in the above embodiments, the first terminal 56c and the second terminal 57c are located in the region that does not overlap the support plate 2. However, the first terminal 56c and the second terminal 57c may be disposed on the support plate 2. In this case, in view of preventing a short circuit between the support plate 2 and the first terminal 56c and the second terminal 57c, it is preferred that the support plate 2 be formed of an insulating member such as ceramic or a resin or an insulating layer be formed between the support plate 2 and the first terminal 56c and the second terminal 57c.

Further, bending may be performed on the edge of the support plate 2. Fig. 13 is a diagram illustrating a modification of the support plate 2. In the description of the present modification, an element that is identical or equivalent to the element of the first embodiment will be designated by the same reference sign as the first embodiment, and redundant description will be omitted unless the element is particularly described. As illustrated in Fig. 13, a support plate 2 of the present modification includes a bent part 26m which is formed on an edge of a main block mounting part 21m at the side opposite to a tail block mounting part 21t and a bent part 26t which is formed on an edge of the tail block mounting part 21t at the side opposite to the main block mounting part 21m. The bent parts 26m, 26t are bent in a direction different from the plane direction of the support plate 2 by bending the edge of the support plate 2 as described above. The strength of the support plate 2 can be increased by forming the bent parts 26m, 26t as described above. Even when a stress is applied to the support plate 2 during load detection, it is possible to prevent the support plate 2 from unintentionally bending.

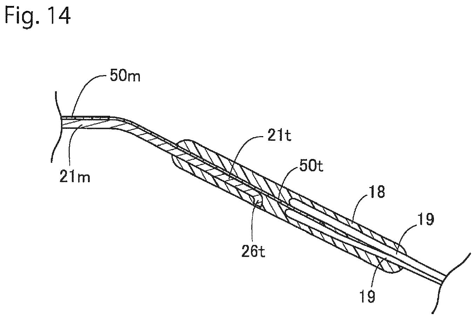

Fig. 14 is a sectional view of a protective resin 18 in the present modification. As illustrated in Fig. 14, in the present modification, the bent part 26t is located inside the protective resin 18. Thus, according to such a modification, it is possible to more firmly fix the protective resin 18 to the support plate 2 to prevent the protective resin 18 from coming out of the support plate 2. Although not particularly illustrated, the bent part 26m may be formed or a bent part may be formed on the edge of the opening 21H in the support plate 2 of the second embodiment.

In the above embodiments, the switch SW which faces the first electrode 56e and the second electrode 57e is used as the pressure sensitive element. However, the pressure sensitive element of the present invention is not limited to the above embodiments. For example, a sheet-like spacer having flexibility which does not include the opening 58c may be employed instead of the spacer 58, and a capacitance pressure sensitive element which detects a load on the basis of a capacitance which changes by a reduction in the distance between the first electrode 56e and the second electrode 57e which face each other with the spacer interposed therebetween, the reduction in the distance being caused by bending of the spacer according to a pressing force, may be applied, or a pressure sensitive element in another form may be used.

Combinations, omissions, changes, and additions of known techniques other than the above embodiments and the above modifications can be appropriately performed on the elements of the above load detection sensor unit within the scope of the present application.

Further, the present invention is applicable as long as the load detection sensor unit is disposed under a seat cushion and detects a load applied from an object to be detected. In the above embodiments, the load detection sensor unit 1 is attached to the plurality of S springs which are stretched side by side in the opening of the frame of the seat, and a pressure caused by seating of a person is detected by the load detection sensor unit. However, the present invention is not limited to the above embodiments, and another form may be employed. For example, the load detection sensor unit may be attached to a plurality of springs which are stretched side by side under a seat cushion of an invalid bed. Also in such a form, it is possible to indicate whether a person is present on the invalid bed using the load detection sensor unit. An elastic member may be used as the seat cushion. Any material that has an elastic force and is capable of transmitting a load from an object to be detected to the load detection sensor unit can be used as the elastic member. Examples of the material of the elastic member include urethane, silicon, and ethylene propylene.

As described above, according to the present invention, it is possible to provide the load detection sensor unit having high durability, and the load detection sensor unit can be used in technical fields of a seat device and an invalid bed.

### Reference Signs List

- 1: load detection sensor unit
- 2: support plate
- 3: shock absorbing member
- 4: upper case
- 5: load detection sensor
- 18: protective resin
- 21: mounting part
- 21m: main block mounting part
- 21t: tail block mounting part
- 21H: opening
- 22: hook part
- 50m: main block
- 50t: tail block
- SC: seat cushion
- SW: switch

## Claims

1. A load detection sensor unit (1) disposable under a seat cushion (SC), the load detection sensor unit (1) comprising:
a load detection sensor (5) having a sheet-like shape, the load detection sensor (5) including a pressure sensitive element (SW) and a terminal (56c, 57c) electrically connected to the pressure sensitive element (SW);
a support plate (2) on which the pressure sensitive element (SW) is mounted; and
a protective resin (18) that covers the terminal (56c, 57c), wherein
the protective resin (18) is fixed to the support plate (2),
**characterized in that**
the protective resin (18) is fixed to the support plate (2) by a self-adhesive strength.

2. The load detection sensor unit (1) according to claim 1, wherein the terminal (56c, 57c) is located in a region that does not overlap the support plate (2).

3. The load detection sensor unit (1) according to claim 1 or 2, wherein, in sectional view of a part including the terminal (56c, 57c) in the load detection sensor (5), the protective resin (18) covers an outer periphery of the part.

4. The load detection sensor unit (1) according to any one of claims 1 to 3, wherein, in sectional view of a position where the protective resin (18) is fixed to the support plate (2), the protective resin (18) covers outer peripheries of the support plate (2) and the load detection sensor (5) that are stacked on each other.

5. The load detection sensor unit (1) according to any one of claims 1 to 4, wherein
the load detection sensor (5) includes a main block (50m) on which the pressure sensitive element (SW) is disposed and a tail block (50t) on which the terminal (56c, 57c) and a wiring line (56w, 57w) that connects the pressure sensitive element (SW) to the terminal (56c, 57c) are disposed,
the support plate (2) includes a main block mounting part (21m) on which the main block (50m) is mounted and a tail block mounting part (21t) on which a part of the tail block (50t) is mounted, the tail block mounting part (21t) extending from the main block mounting part (21m), and
the protective resin (18) is fixed to an end of the tail block mounting part (21t) at the side opposite to the main block mounting part (21m).

6. The load detection sensor unit (1) according to any one of claims 1 to 4, wherein
the support plate (2) includes an opening (21H),
the terminal (56c, 57c) is located inside the opening (21H) in plan view of the support plate (2), and
a part of the protective resin (18) is disposed inside the opening (21H) and fixed to at least a part of an edge of the opening (21H).

7. The load detection sensor unit (1) according to claim 6, wherein the protective resin (18) is fixed to the entire edge of the opening (21H).

8. The load detection sensor unit according to any one of claims 1 to 7, wherein a bent part (26m, 26t) bent in a direction different from a plane direction of the support plate (2) is formed in at least a part of an edge part of the support plate (2).

9. The load detection sensor unit according to claim 8, wherein the bent part (26t) is located inside the protective resin (18).

10. The load detection sensor unit according to any one of claims 1 to 9, further comprising
a pressing member (4) including a pressure receiving surface (45S) that receives a pressing force from the seat cushion (SC) and a pressing part (46) that presses the pressure sensitive element (SW), wherein
the pressing member (4) includes a rib (49) inserted into a hole (20H) formed on the support plate (2) through the load detection sensor (5).

## Patentansprüche

1. Ladungserfassungssensoreinheit (1), die unter einem Sitzpolster (SC) angeordnet werden kann, wobei die Ladungserfassungssensoreinheit (1) umfasst:
einen Ladungserfassungssensor (5) mit einer plattenähnlichen Form, wobei der Ladungserfassungssensor (5) ein druckempfindliches Element (SW) und einen elektrisch mit dem druckempfindlichen Element (SW) verbundenen Anschluss (56c, 57c) enthält;
eine Trägerplatte (2), auf der das druckempfindliche Element (SW) montiert ist; und
ein Schutzharz (18), das den Anschluss (56c, 57c) bedeckt, wobei das Schutzharz (18) an der Trägerplatte (2) befestigt ist,
**dadurch gekennzeichnet, dass**
das Schutzharz (18) durch Selbstklebekraft an der Trägerplatte (2) befestigt ist.

2. Ladungserfassungssensoreinheit (1) nach Anspruch 1, wobei der Anschluss (56c, 57c) in einem Bereich angeordnet ist, der die Trägerplatte (2) nicht überlappt.

3. Ladungserfassungssensoreinheit (1) nach Anspruch 1 oder 2, wobei in Schnittansicht eines Teils einschließlich des Anschlusses (56c, 57c) in dem Ladungserfassungssensor (5) das Schutzharz (18) einen Außenumfang des Teils bedeckt.

4. Ladungserfassungssensoreinheit (1) nach einem der Ansprüche 1 bis 3, wobei in Schnittansicht einer Position, an der das Schutzharz (18) an der Trägerplatte (2) befestigt ist, das Schutzharz (18) Außenumfänge der Trägerplatte (2) und des Ladungserfassungssensors (5) bedeckt, die aufeinandergestapelt sind.

5. Ladungserfassungssensoreinheit (1) nach einem der Ansprüche 1 bis 4, wobei
der Ladungserfassungssensor (5) umfasst: einen Hauptblock (50m), auf dem das druckempfindliche Element (SW) angeordnet ist, und einen Endblock (50t), auf dem der Anschluss (56c, 57c) und eine Verdrahtungsleitung (56w, 57w), die das druckempfindliche Element (SW) mit dem Anschluss (56c, 57c) verbindet, angeordnet sind,
die Trägerplatte (2) einen Hauptblock-Montageteil (21m), an dem der Hauptblock (50m) montiert ist, und einen Endblock-Montageteil (21t), an dem ein Teil des Endblocks (50t) montiert ist, enthält, wobei das Endblock-Montageteil (21t) sich von dem Hauptblock-Montageteil (21m) aus erstreckt, und
das Schutzharz (18) an einem Ende des Endblock-Montageteils (21t) auf der Seite gegenüber dem Hauptblock-Montageteil (21m) befestigt ist.

6. Ladungserfassungssensoreinheit (1) nach einem der Ansprüche 1 bis 4, wobei
die Trägerplatte (2) eine Öffnung (21H) enthält,
der Anschluss (56c, 57c) sich in Draufsicht der Trägerplatte (2) innerhalb der Öffnung (21H) befindet, und
ein Teil des Schutzharzes (18) innerhalb der Öffnung (21H) angeordnet ist und an mindestens einem Teil einer Kante der Öffnung (21H) befestigt ist.

7. Ladungserfassungssensoreinheit (1) nach Anspruch 6, wobei das Schutzharz (18) an der gesamten Kante der Öffnung (21H) befestigt ist.

8. Ladungserfassungssensoreinheit (1) nach einem der Ansprüche 1 bis 7, wobei ein gebogener Teil (26m, 26t), der in einer Richtung gebogen ist, die sich von einer Richtung in der Ebene der Trägerplatte (2) unterscheidet, in zumindest einem Teil eines Kantenteils der Trägerplatte (2) ausgebildet ist.

9. Ladungserfassungssensoreinheit (1) nach Anspruch 8, wobei der gebogene Teil (26t) sich innerhalb des Schutzharzes (18) befindet.

10. Ladungserfassungssensoreinheit (1) nach einem der Ansprüche 1 bis 9, ferner umfassend
ein Druckelement (4) mit einer Druckaufnahmefläche (45S), die eine Druckkraft von dem Sitzpolster (SC) aufnimmt, und einem Druckteil (46), das auf das druckempfindliche Element (SW) drückt, wobei
das Druckelement (4) eine Rippe (49) enthält, die hindurch den Ladungserfassungssensor (5) in ein Loch (20H) eingeführt ist, das auf der Trägerplatte (2) gebildet ist.

## Revendications

1. Unité de capteur de détection de charge (1) pouvant être disposée sous un coussin de siège (SC), l'unité de capteur de détection de charge (1) comprenant :
un capteur de détection de charge (5) ayant une forme de type feuille, le capteur de détection de charge (5) comprenant un élément sensible à la pression (SW) et une borne (56c, 57c) électriquement connectée à l'élément sensible à la pression (SW) ;
une plaque de support (2) sur laquelle l'élément sensible à la pression (SW) est monté ; et
une résine protectrice (18) qui couvre la borne (56c, 57c), dans laquelle la résine protectrice (18) est fixée à la plaque de support (2),
**caractérisée en ce que**
la résine protectrice (18) est fixée à la plaque de support (2) par une force auto-adhésive.

2. Unité de capteur de détection de charge (1) selon la revendication 1, dans laquelle la borne (56c, 57c) est située dans une région qui ne chevauche pas la plaque de support (2).

3. Unité de capteur de détection de charge (1) selon la revendication 1 ou 2, dans laquelle, dans une vue en coupe d'une partie comprenant la borne (56c, 57c) dans le capteur de détection de charge (5), la résine protectrice (18) couvre une périphérie extérieure de la partie.

4. Unité de capteur de détection de charge (1) selon l'une quelconque des revendications 1 à 3, dans laquelle, dans une vue en coupe d'une position où la résine protectrice (18) est fixée à la plaque de support (2), la résine protectrice (18) couvre les périphéries extérieures de la plaque de support (2) et du capteur de détection de charge (5) qui sont empilés l'un sur l'autre.

5. Unité de capteur de détection de charge (1) selon l'une quelconque des revendications 1 à 4, dans laquelle
le capteur de détection de charge (5) comprend un bloc principal (50m) sur lequel est disposé l'élément sensible à la pression (SW) et un bloc de queue (50t) sur lequel sont disposées la borne (56c, 57c) et une ligne de câblage (56w, 57w) qui relie l'élément sensible à la pression (SW) à la borne (56c, 57c),
la plaque de support (2) comprend une partie de montage de bloc principal (21m) sur laquelle est monté le bloc principal (50m) et une partie de montage de bloc de queue (21t) sur laquelle est montée une partie du bloc de queue (50t), la partie de montage de bloc de queue (21t) s'étendant depuis la partie de montage de bloc principal (21m), et
la résine protectrice (18) est fixée à une extrémité de la partie de montage de bloc de queue (21t) au niveau du côté opposé à la partie de montage de bloc principal (21m).

6. Unité de capteur de détection de charge (1) selon l'une quelconque des revendications 1 à 4, dans laquelle
la plaque de support (2) comprend une ouverture (21H),
la borne (56c, 57c) est située à l'intérieur de l'ouverture (21H) dans une vue en plan de la plaque de support (2), et
une partie de la résine protectrice (18) est disposée à l'intérieur de l'ouverture (21H) et fixée à au moins une partie d'un bord de l'ouverture (21H).

7. Unité de capteur de détection de charge (1) selon la revendication 6, dans laquelle la résine protectrice (18) est fixée à la totalité du bord de l'ouverture (21H).

8. Unité de capteur de détection de charge selon l'une quelconque des revendications 1 à 7, dans laquelle une partie courbée (26m, 26t) qui est courbée dans une direction différente d'une direction plane de la plaque de support (2) est formée dans au moins une partie d'une partie de bord de la plaque de support (2).

9. Unité de capteur de détection de charge selon la revendication 8, dans laquelle la partie courbée (26t) est située à l'intérieur de la résine protectrice (18).

10. Unité de capteur de détection de charge selon l'une quelconque des revendications 1 à 9, comprenant en outre
un élément de pression (4) comprenant une surface de réception de pression (45S) qui reçoit une force de pression à partir du coussin de siège (SC) et une partie de pression (46) qui presse l'élément sensible à la pression (SW), dans laquelle
l'élément de pression (4) comprend une nervure (49) insérée dans un trou (20H) formé sur la plaque de support (2) à travers le capteur de détection de charge (5).
